# FASCICULE DE BREVET EUROPEEN

(11) **EP 3 490 372 B1**
(45) Date de publication et mention de la délivrance du brevet: **05.08.2020**
(21) Numéro de dépôt: 17749660.1
(22) Date de dépôt: 26.07.2017
(51) Int. Cl.: A01K 61/55

(54) **DISPOSITIF D'ÉLEVAGE EN MER D'ANIMAUX D'AQUACULTURE**
VORRICHTUNG ZUR AUFZUCHT VON AQUAKULTURTIEREN AUF DEM MEER
DEVICE FOR REARING AQUACULTURE ANIMALS AT SEA

(30) Priorité: 29.07.2016 FR 1657372
(43) Date de publication de la demande: 05.06.2019
(73) Titulaire: Genocean, 17410 Saint-Martin-de-Ré (FR)
(72) Inventeur: MARISSAL, Eric, 17410 Saint-Martin-de-Ré (FR); PINCOT, Lila, 17630 La Flotte (FR)
(74) Mandataire: Lavoix
(86) Numéro de dépôt international: PCT/EP2017/068885
(87) Numéro de publication internationale: WO 2018/019884

(56) Documents cités:
- CN-A- 105 684 975
- FR-A1- 2 576 484

## Description

L'invention concerne en général les dispositifs d'élevage en mer d'animaux d'aquaculture, notamment les coquillages et plus particulièrement les huîtres.

Dans l'ensemble des pays ostréicoles, les huîtres sont élevées sur des supports ou dans des containers fixes dans la zone intertidale, et subissent des aléas climatiques, biologiques ou chimiques susceptibles de porter préjudice aux performances de l'élevage.

Il y a une trentaine d'années environ, est apparue la technique de l'élevage au large (offshore) sur longue ligne. Dans de tels élevages, les huîtres sont constamment immergées au large et bénéficient de conditions environnementales stables et saines. Elles présentent des croissances exceptionnelles. Elles sont par exemple élevées dans des lanternes japonaises souples, du type décrit dans la demande de brevet EP 0 682 863.

On connait également du document FR2576484 un appareil pour élevage de mollusques comprenant un récipient mobile perméable à l'eau.

Une autre technique d'élevage offshore développée depuis quinze ans consiste à élever les huîtres dans des containers rangés dans des cages en acier.

Encore une autre technique d'élevage offshore consiste à utiliser des paniers rigides, empilés les uns sur les autres, formant ainsi une lanterne rigide.

Ces deux dernières techniques présentent trois inconvénients majeurs.

Le premier inconvénient est l'encombrement, puisque le volume des containers/paniers est incompressible lors des transports, et représente dix fois le volume des huîtres élevées.

Le second problème est l'encrassement des grillages constituant les containers/paniers. Les mailles doivent être nettoyées très régulièrement, et d'autant plus souvent que la maille est petite. Les mailles de petites tailles sont utilisées pour l'élevage des coquillages de petites tailles.

Le troisième inconvénient est le poids des containers/paniers. Ceux-ci doivent présenter une forte rigidité, car ils sont utilisés dans des conditions environnementales exigeantes.

Les lanternes japonaises souples présentent au contraire de nombreux avantages. Elles présentent un faible encombrement quand elles ne sont pas utilisées. Les filets sont jetables, de telle sorte qu'il n'est pas nécessaire de les nettoyer, même quand un filet à petite maille est utilisé dans le cas de l'élevage de juvénile.

En revanche, elles procurent une vitesse de croissance exceptionnellement élevée, notamment pour les juvéniles, de telle sorte que les lanternes se remplissent très vite et que les huîtres situées sur un même plateau s'agglomèrent rapidement. Ceci conduit à la nécessité d'intervenir très fréquemment en vue de dédoubler et de séparer les huitres, ce qui est difficilement compatible avec une production de masse.

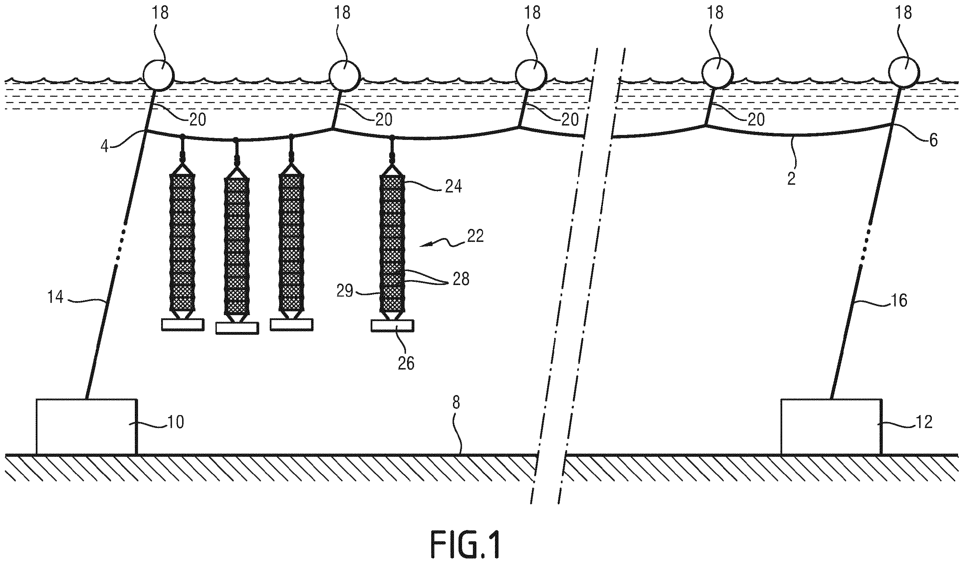

Un dispositif d'élevage selon l'état de la technique, à l'aide de lanternes japonaises, est représenté sur la figure 1. Ce dispositif comporte un câble 2, encore appelé haussière, dont les extrémités 4 et 6 sont amarrées sur le fond 8 de la mer à l'aide de gueuses 10, 12 reliées par des câbles 14 et 16 aux extrémités 4 et 6 respectivement. Les câbles 14 et 16 ont par exemple une longueur d'environ 30 mètres. La haussière 2 a une longueur d'environ 100 m.

A intervalle régulier d'environ 6 m, ainsi qu'aux extrémités 4 et 6 sont agencées des bouées 18 reliées à la haussière 2 par l'intermédiaire de cordes 20. Ceci permet de maintenir la haussière à une profondeur d'environ 1 m et à peu près parallèle au fond 8 de la mer.

Des lanternes japonaises 22 sont suspendues sous la haussière en étant régulièrement espacées le long de celle-ci.

Chaque lanterne japonaise 22 est constituée d'un ensemble de plateaux 28 superposés reliés entre eux par des cordes. Les huîtres 29 sont disposées sur ces plateaux. Le filet 24 en forme de tube vient épouser le bord des plateaux de façon à éviter que les huîtres ne passent d'un étage à l'autre. L'ensemble forme une lanterne japonaise 22 s'étendant à peu près verticalement en l'absence de courant important, chaque lanterne étant reliée dans sa partie inférieure à un lest 26.

L'efficacité des lanternes japonaises pour la croissance des huîtres repose sur l'utilisation du lest 26. Celui-ci permet à la lanterne de rester verticale en dépit des courants marins, de telle sorte que l'eau de mer traverse en force le filet et assure une excellente alimentation pour les huîtres situées à l'intérieur de la lanterne japonaise.

En revanche, on observe comme indiqué plus haut une surcroissance des huîtres élevées dans ces conditions caractérisée par une grande fragilité de coquille, ainsi qu'un encrassement des milieux interstitiels entre les animaux, sur les plateaux, ce qui peut conduire à une surmortalité si les interventions d'entretien et de dédoublage ne sont pas effectuées à la bonne fréquence qui est très élevée (de l'ordre de 15 jours en été), ce qui techniquement est très difficile à réaliser dans le cadre d'une production de masse.

Dans ce contexte, l'invention vise à proposer un dispositif d'élevage en mer qui ne présente pas les inconvénients ci-dessus.

A cette fin, l'invention porte sur un dispositif d'élevage en mer d'animaux d'aquaculture selon la revendication 1.

Les pales liées aux enceintes d'élevage font que ces enceintes sont entraînées en rotation par le courant marin.

Les pales permettent notamment l'utilisation de la force marée motrice pour faire tourner les enceintes d'élevage.

En effet, les installations d'élevage en mer sont principalement installées dans des zones relativement protégées, comme des pertuis ou des rias ou des estuaires. Elles sont donc soumises au courant des marées canalisées par les embouchures. La force des courants oscille de 0 à un maximum entre les marées haute et basse. Les périodes d'inversion où le courant est nul se produisent à l'heure de pleine mer et à l'heure de basse mer. Les plus forts courants se situent à mi-temps de la période séparant la pleine mer de la basse mer. Pendant la période de courant fort, typiquement pendant un tiers de la durée séparant la marée haute de la marée basse, l'empilement fait un angle par rapport à la verticale. Cette inclinaison permet aux pales de faire face au courant et ainsi d'entrainer les enceintes d'élevage en rotation. Par ailleurs, les animaux d'aquaculture vont s'accumuler aux points bas des enceintes du fait de l'inclinaison. Et ainsi, du fait de la rotation, les animaux vont être roulés les uns contre les autres, comme des billes dans une bétonnière, pendant toute la période de courant fort.

Le reste du temps, l'inclinaison des enceintes d'élevage est trop faible pour susciter un mouvement des animaux d'aquaculture, ce qui permet aux animaux de se nourrir et de développer leur croissance.

Le dispositif d'élevage peut encore présenter une ou plusieurs des caractéristiques des revendications 2 à 15.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique d'un dispositif d'élevage selon l'état de la technique ;
- la figure 2 est une représentation schématique simplifiée d'une partie d'un dispositif d'élevage selon l'invention, conforme à un premier mode de réalisation ;
- la figure 3 est une vue similaire à celle de la figure 2, montrant la position de l'empilement d'enceintes d'élevage en période de courant fort ;
- la figure 4 est une vue en perspective de l'hydrolienne équipant l'empilement des figures 2 et 3 ;
- la figure 5 est une représentation schématique simplifiée d'un mode de fixation de l'hydrolienne au plateau inférieur du dispositif des figures 2 et 3 ;
- la figure 6 est une vue de côté d'un empilement d'enceinte d'élevage pour un second mode de réalisation de l'invention ;
- la figure 7 est une représentation d'une variante du second mode de réalisation de l'invention ;
- les figures 8 et 9 sont des schémas de principe illustrant l'agencement des pales sur les enceintes d'élevage de la figure 6 ;
- la figure 10 illustre une variante avantageuse du dispositif d'élevage selon le second mode de réalisation de l'invention ;
- la figure 11 est une vue suivant l'incidence de la flèche XI de la figure 10 ;
- les figures 12 et 13 illustrent schématiquement d'autres types de structure fixées au fond marin et permettant de suspendre les empilements d'enceinte.

L'invention porte sur un dispositif d'élevage en mer d'animaux d'aquaculture. Ces animaux sont typiquement des coquillages, et sont plus particulièrement des huîtres. En variante, les coquillages sont toutes sortes de bivalves comme des palourdes, des moules, ou tout autre type de coquillage.

Il est prévu pour l'élevage en mer, c'est-à-dire en eau profonde. Cet élevage peut être effectué au large des côtes ou dans des pertuis, des estuaires ou des rias, ou encore dans des étangs communiquant avec la mer, ou dans tout autre endroit adapté.

Il est particulièrement adapté aux zones soumises au courant des marées.

Le dispositif d'élevage 1 comporte une structure 29 fixée au fond marin.

La structure 29 comporte par exemple un câble 2 fixé au fond marin, par exemple comme illustré sur la figure 1 et décrit plus haut.

En variante, le câble 2 est fixé au fond marin par tout autre système adapté.

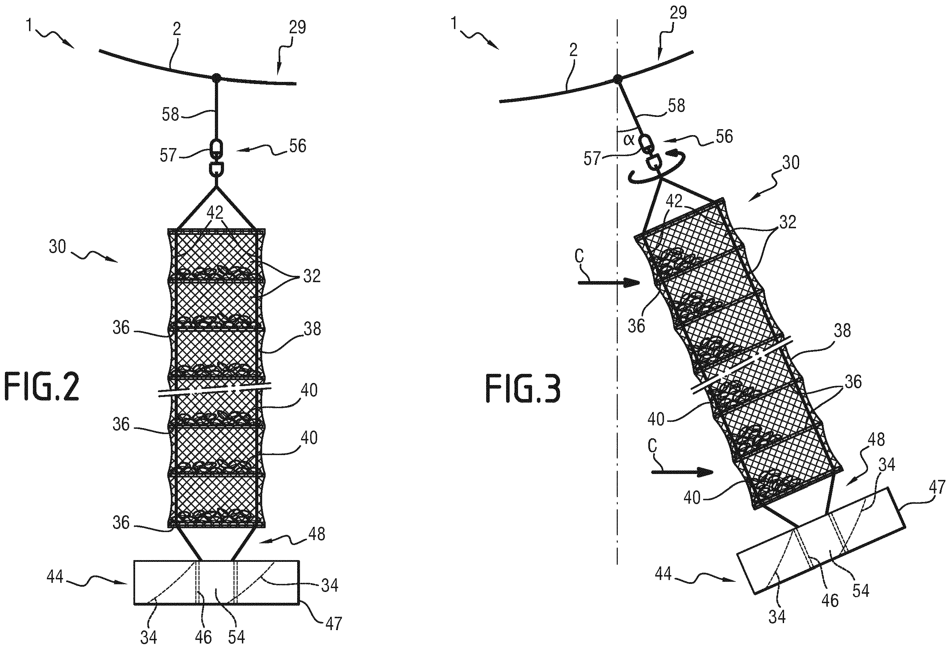

Le dispositif comporte également au moins un empilement 30 d'enceintes d'élevage 32, superposées les unes au-dessus des autres selon une direction longitudinale. Dans la représentation de la figure 2, la direction longitudinale est verticale.

Le dispositif comporte encore des pales 34 liées aux enceintes d'élevage 32 et agencées pour que les enceintes d'élevage 32 soient entraînées en rotation autour d'un axe longitudinal par le courant marin.

Dans le premier mode de réalisation, représenté sur les figures 2 à 5, l'empilement d'enceintes d'élevage est une lanterne japonaise souple.

Il comporte ainsi une pluralité de plateaux 36 superposés longitudinalement les uns au-dessus des autres. Les plateaux 36 sont enfilés dans un filet tubulaire 38. Les plateaux 36 définissent entre eux les enceintes d'élevage 32. Les animaux d'aquaculture 40 sont disposés sur les plateaux, dans chaque enceinte d'élevage 32. Le filet tubulaire 38 est serré par tout moyen contre le bord de chaque plateau 36 de manière à confiner les animaux 40 à l'intérieur de chaque enceinte. Typiquement, chaque plateau 36 est fixé à des cordes 42 d'orientation longitudinale, prévues pour suspendre l'empilement 30 au câble 2.

Selon le premier mode de réalisation, le dispositif comporte pour le ou chaque empilement 30 une hydrolienne 44 définissant les pales 34.

On entend ici par hydrolienne une turbine hydraulique, qui utilise l'énergie cinétique des courants marins et la transforme en un mouvement de rotation des enceintes d'élevage 32.

L'hydrolienne peut être de tout type adapté.

Par exemple, comme illustré sur les figures 2, 3 et 4, l'hydrolienne 44 comporte un moyeu 46, une jante 47 entourant le moyeu 46, les pales 34 s'étendant chacune du moyeu 46 à la jante 47. Le nombre, la forme et la surface des pales 34 sont choisis de manière à obtenir une force d'entraînement en rotation suffisante dans les conditions d'utilisation qui seront décrites plus loin.

L'hydrolienne 44 est typiquement liée à l'enceinte d'élevage située à une extrémité longitudinale inférieure de l'empilement 30.

En d'autres termes, l'hydrolienne 44 est liée au plateau 36 situé le plus bas dans l'empilement.

Dans l'exemple représenté sur les figures 2, 3 et 4, l'hydrolienne est liée à ladite enceinte d'élevage par une ligature 48.

On entend par là que ce sont des câbles qui lient l'hydrolienne 44 à l'enceinte d'élevage inférieure 32.

Avantageusement, ce sont les extrémités inférieures des cordes 42 qui lient l'hydrolienne 44 à l'enceinte d'élevage inférieure 32.

La ligature 48 lie le moyeu 46 à l'enceinte d'élevage inférieure.

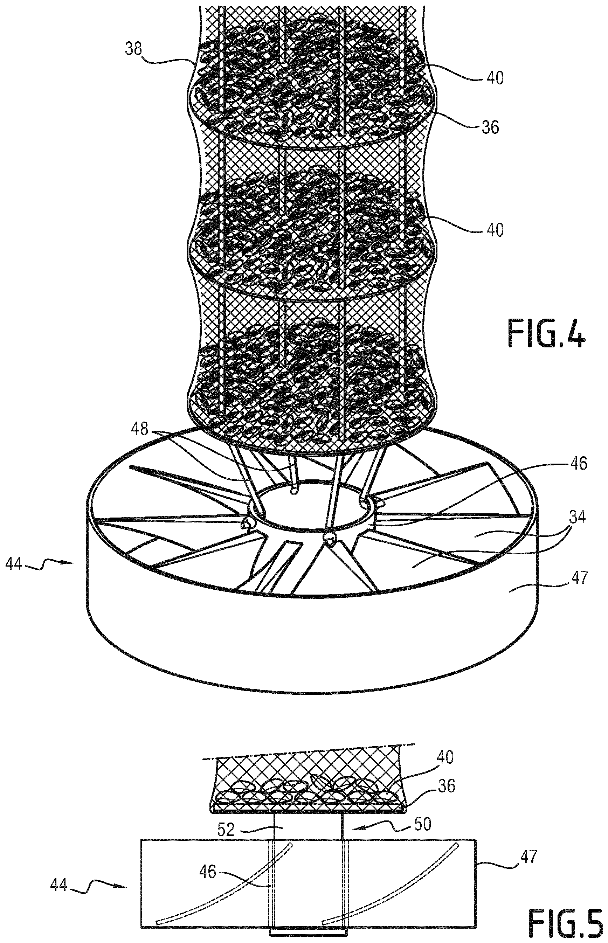

Dans une variante de réalisation représentée sur la figure 5, l'hydrolienne 44 est liée à l'enceinte d'élevage inférieure 32 par une fixation rigide 50. Cette fixation rigide est par exemple un clips.

Par exemple, le plateau 36 comporte un prolongement 52 fixé sous ce plateau, venant se clipser à l'intérieur du moyeu 46 de l'hydrolienne.

L'hydrolienne 44 est placée sous l'empilement 30, suivant la direction longitudinale. En d'autres termes, il est placé longitudinalement sous l'enceinte d'élevage inférieure 32.

L'hydrolienne 44 est typiquement en une matière plastique injectée, par exemple en polypropylène. Elle peut aussi comporter des pales en matériaux souples, comme par exemple de la toile telle que la toile pour les voiles ou les parachutes. Ces matières contiennent avantageusement un adjuvant pour améliorer la solidité, la résistance aux UV, ou la résistance à l'encrassement (effet anti-fooling) par exemple.

De préférence, le ou chaque empilement 30 comporte un lest 54. Le lest 54 est par exemple monté dans le moyeu 46 de l'hydrolienne. Par exemple, le lest 54 est un anneau en acier ou en plomb, ou un bloc de béton.

Le dispositif comporte encore une liaison tournante 56 de l'empilement 30 à la structure 29, ici au câble 2. La liaison tournante 56 comporte un organe rotatif 57 qui autorise une rotation de l'empilement 30 par rapport à la structure 29 autour de l'axe longitudinal.

La liaison tournante est de tout type adapté. Par exemple, l'organe 57 est un émerillon ou tout autre organe équivalent permettant la rotation de l'empilement 30.

La liaison 56 est conçue pour que l'empilement 30 soit suspendu à la structure 29, et puisse penduler autour d'une position où l'axe longitudinal est vertical, comme représenté sur les figures 2 et 3.

Dans l'exemple représenté sur la figure 2, la liaison 56 comprend un câble 58 lui-même fixé au câble 2. L'organe rotatif 57 lie le câble 58 à l'empilement 30, de préférence aux extrémités supérieures des cordes 42.

Comme indiqué plus haut, le dispositif d'élevage 1 est prévu pour être implanté dans une zone soumise au courant des marées. Dans les périodes d'inversion, c'est-à-dire à l'heure de la pleine mer et à l'heure de la basse mer, les courants de marée sont faibles. L'empilement d'enceinte d'élevage 30 adopte donc une position où la direction longitudinale est sensiblement verticale, comme illustré sur la figure 2. L'axe du moyeu 46, c'est-à-dire l'axe de l'hydrolienne 44, est sensiblement vertical. Dans cette position, l'hydrolienne n'est pas entraînée en rotation. Les enceintes d'élevage sont donc sensiblement statiques. Ces conditions sont favorables pour que les animaux d'aquaculture 40 puissent se nourrir et se développer.

Au contraire, pendant toute la période de fort courant de marée, l'empilement 30 est incliné, comme illustré sur la figure 3. En d'autres termes, la direction longitudinale forme un angle α avec la verticale. Cet angle α est fonction de la force des courants de marée et du poids du lest 54. Les courants de marée sont représentés par les flèches C sur la figure 3.

Le lest 54 est dimensionné pour que la direction longitudinale forme avec la verticale un angle α compris entre 30° et 60° au milieu d'une période séparant la marée haute et la marée basse.

Autrement dit, l'angle α au moment où les courants de marée sont les plus forts est compris entre 30° et 60°.

Cet angle est fonction de la force du courant et donc de la force de la marée et donc du coefficient de marée qui varie chaque jour entre les périodes de vives eaux (fortes marées) et de mortes eaux (petites marées). Le poids du lest 54 est choisi pour que l'angle α reste dans la fourchette indiquée ci-dessus qui permet la rotation durant un nombre de jours suffisant entre deux périodes de mortes eaux pour obtenir les résultats d'endurcissement attendus en fonction de la nature de l'élevage (grossissement, engraissement, etc...).

Il est à noter que la présence du lest n'est pas obligatoire. Dans certains cas, le poids de l'hydrolienne 44 et/ou de l'ensemble 30 des enceintes d'élevage 32 ou des animaux 40 sont suffisants pour obtenir l'effet recherché. Les pales 34 sont agencées de telle sorte que, pour un courant marin sensiblement horizontal, et pour un angle α compris entre 30° et 60°, les enceintes d'élevage 32 soient entraînées en rotation autour de l'axe longitudinal par le courant marin C.

On ajuste notamment la surface et l'angle d'incidence des pales 34 par rapport au courant marin C.

Dans l'exemple représenté, les enceintes d'élevage 32 sont liées en rotation les unes aux autres autour de l'axe longitudinal. Elles sont typiquement liées par les cordes 42.

L'hydrolienne 44 entraine en rotation autour de l'axe longitudinal l'enceinte d'élevage 32 inférieure. Celle-ci entraîne en rotation l'enceinte située immédiatement au-dessus, et ainsi de suite jusqu'à l'enceinte 32 située en haut de l'empilement 30. La liaison tournante 56 permet le mouvement de rotation de l'enceinte d'élevage supérieure 32 par rapport à la structure 29.

Comme visible sur la figure 3, les enceintes d'élevage 32 sont inclinées par rapport à l'horizontale. Dans l'exemple représenté, les plateaux 36 forment un angle α par rapport à l'horizontale.

Les animaux d'aquaculture se rassemblent donc dans un point bas de chaque enceinte d'élevage 32. Du fait de la rotation des enceintes d'élevage, les animaux d'élevage dévalent en continu vers le point bas des plateaux en rotation et sont roulés les uns sur les autres.

Typiquement, les pales 34 sont agencées pour que, compte tenu de la force des courants marins dans la zone où est implanté le dispositif d'élevage, un tel mouvement de rotation se produise au moins pendant 25 à 50% de la durée séparant la marée haute de la marée basse, idéalement pendant un tiers de ladite durée.

Pendant le reste du temps, l'inclinaison, c'est-à-dire l'angle a, est trop faible pour susciter un mouvement des animaux d'aquaculture.

Un tel mouvement favorise un auto-nettoyage des enceintes d'élevage 32. Il favorise également une abrasion des coquilles des animaux d'aquaculture permettant d'éviter la surcroissance et le recollement par nacration des animaux les uns avec les autres ou sur les enceintes d'élevage.

Ceci favorise également l'engraissement des animaux, du fait que l'effort alimentaire n'est pas exclusivement détourné vers la croissance de la coquille mais est aussi consacré à l'accumulation de réserve.

Typiquement, le dispositif 1 d'élevage en mer comporte une pluralité d'empilement 30, chacun lié à la structure 29 par une liaison tournante 56. Chaque empilement est identique à celui décrit plus haut, et est équipé de sa propre hydrolienne 44. Quand la structure 29 comporte un câble 2, les empilements 30 sont fixés côte à côte, régulièrement espacés le long du câble 2, comme illustré sur la figure 1.

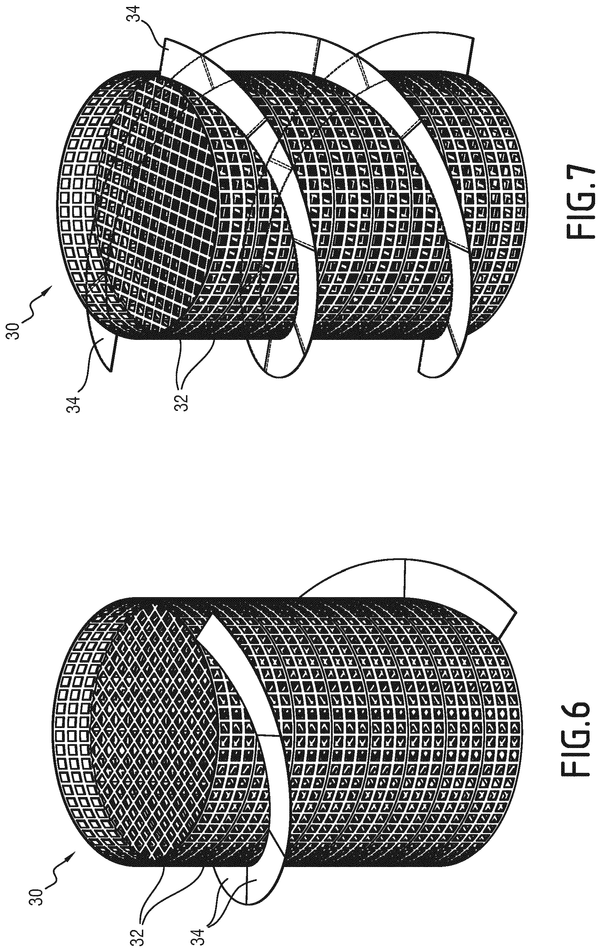

Un second mode de réalisation de l'invention va maintenant être décrit, en référence aux figures 6 à 11.

Seuls les points par lesquels le second mode de réalisation diffère du premier seront détaillés ci-dessous. Les éléments identiques ou assurant la même fonction seront désignés par les mêmes références.

Dans le second mode de réalisation, les enceintes d'élevage sont des casiers rigides. L'empilement 30 ne constitue pas une lanterne japonaise souple, mais une lanterne japonaise rigide. Chaque casier comporte une ou plusieurs parois constituées par un maillage, les animaux d'aquaculture étant disposés à l'intérieur du panier. Les paniers 32 sont rigidement fixés les uns aux autres.

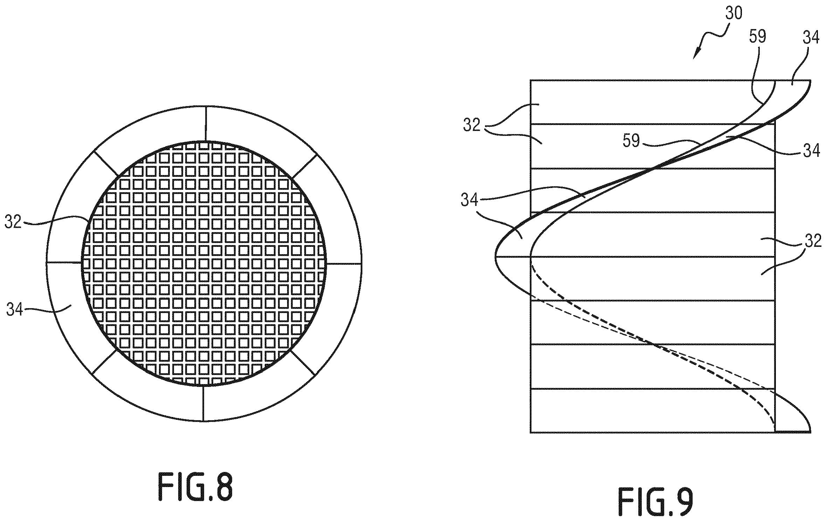

Cet agencement est illustré sur la figure 9, qui montre une vue de côté des casiers 32.

Dans le second mode de réalisation, les pales 34 sont rigidement fixées aux enceintes d'élevage 32 et sont réparties longitudinalement le long de l'empilement 30.

Plus précisément, les pales 34 forment avantageusement au moins une hélice d'axe longitudinal. L'hélice s'enroule autour de l'empilement 30 comme illustré sur la figure 6.

Typiquement, une enceinte donnée d'élevage 32 porte au moins une des pales 34. Comme illustré sur les figures 8 et 9, les pales portées par l'enceinte immédiatement au-dessus et par l'enceinte immédiatement en dessous dans l'empilement 30 peuvent se placer dans le prolongement l'une de l'autre.

Par exemple, chaque pale 34 s'étend sur un huitième d'un tour, de telle sorte que les pales portées par huit enceintes consécutives dans l'empilement permettent de constituer un tour d'hélice continu d'un pas donné.

De préférence, il faut entre quatre et dix enceintes pour réaliser un pas, soit un tour de l'hélice.

Avantageusement, les pales 34 forment une hélice simple. Une telle hélice est illustrée sur la figure 6. Dans ce cas, chaque enceinte porte une seule pale 34.

Dans une variante de réalisation illustrée sur la figure 7, les pales 34 forment une hélice double. Une hélice double comporte deux filets hélicoïdaux, parallèles l'un à l'autre. Dans ce cas, chaque enceinte 32 porte deux pales 34, typiquement diamétralement opposé.

Dans le second mode de réalisation de l'invention, chaque enceinte d'élevage 32 présente typiquement une section circulaire perpendiculairement à la direction longitudinale.

Dans le second mode de réalisation, chaque empilement 30 comporte un lest 54 comme décrit relativement au premier mode de réalisation de l'invention.

Dans le second mode de réalisation, le courant marin entraîne l'empilement 30 en agissant sur l'hélice hélicoïdale.

Il est à noter que l'hélice ne s'étend pas nécessairement sur toute la hauteur de l'empilement. Ainsi, certaines enceintes d'élevage 30 peuvent ne pas être équipées de pales 34. L'hélice peut être discontinue et comporter deux tronçons séparés par un espace non équipé de pales.

Typiquement les pales 34 peuvent être amovibles, ce qui permet d'adapter le nombre et la taille des pales 34 aux circonstances ou aux effets recherchés.

Chaque enceinte d'élevage 30 comporte ainsi au moins une zone 59 agencée pour la fixation amovible d'une des pales 34. La zone 59 est agencée par exemple pour clipser la pale 34. En variant, la zone 59 permet une fixation par vissage ou par tout autre moyen.

Les zones de fixation 59 en attente sur les casiers sont par exemple multiples et permettent ainsi de constituer une ou plusieurs hélices.

Les zones de fixation 59 permettent avantageusement d'installer les pales amovibles dans le sens de rotation direct ou indirect, permettant ainsi avec le même casier de former des lanternes à rotation hélicoïdale directe ou indirecte.

La longueur et la largeur de l'hélice sont choisies en fonction de la force motrice recherchée.

Comme décrit plus haut, le dispositif 1 comprend typiquement plusieurs empilements 30 liés côte à côte à la structure 29. L'espacement séparant les empilements 30 le long de la structure 29 est généralement inférieur à la hauteur de chaque empilement 30. Lors des plus fortes marées, chaque empilement risque d'entrer en contact avec les empilements voisins.

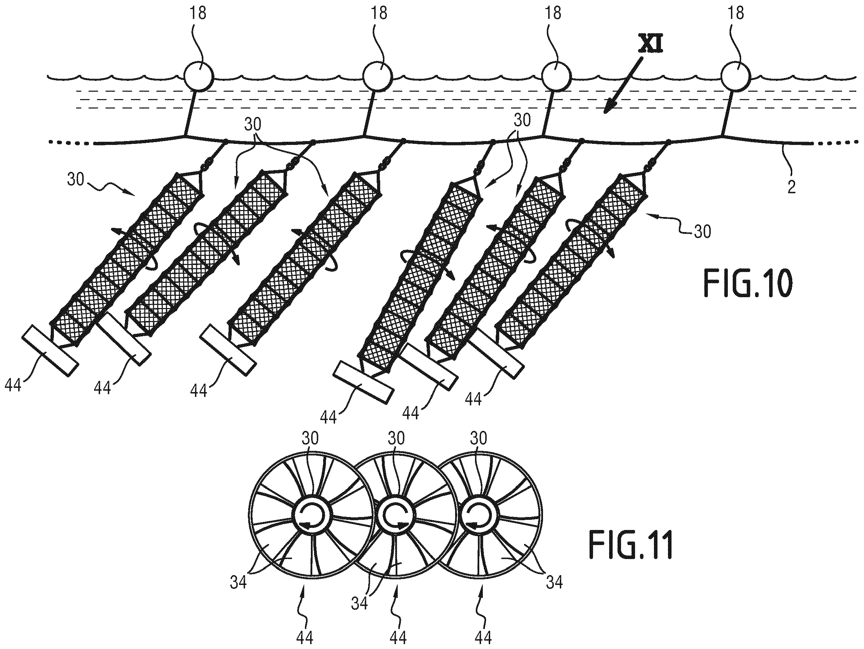

Pour éviter les frictions entre les empilements, les pales respectives de deux empilements 30 voisins sont agencées pour que lesdits deux empilements 30 voisins soient entraînés en rotation par rapport à la structure 2 suivant des sens de rotation respectifs opposés l'un à l'autre. Ceci est illustré sur les figures 10 et 11. Ainsi, en cas de contact lors de très fortes marées par exemple, les empilements 30 roulent l'un contre l'autre, à la manière d'un engrenage.

En variante, l'empilement 30 d'enceintes d'élevage constitué de casiers rigides peut ne pas être équipé de pales formant une hélice hélicoïdale, mais être équipé d'une hydrolienne du type décrit relativement au premier mode de réalisation de l'invention.

Inversement, l'empilement 30 du type lanterne japonaise souple peut ne pas être équipé d'une hydrolienne mais plutôt de pales solidaires de chaque enceinte d'élevage et définissant ensemble une hélice d'axe longitudinal à la manière du second mode de réalisation de l'invention. Dans ce cas, les pales 34 sont avantageusement rigidement fixées au plateau 36, et les plateaux 36 sont fixes en rotation les uns par rapport aux autres.

La structure 29 peut ne pas comprendre un câble 2 du type décrit ci-dessus.

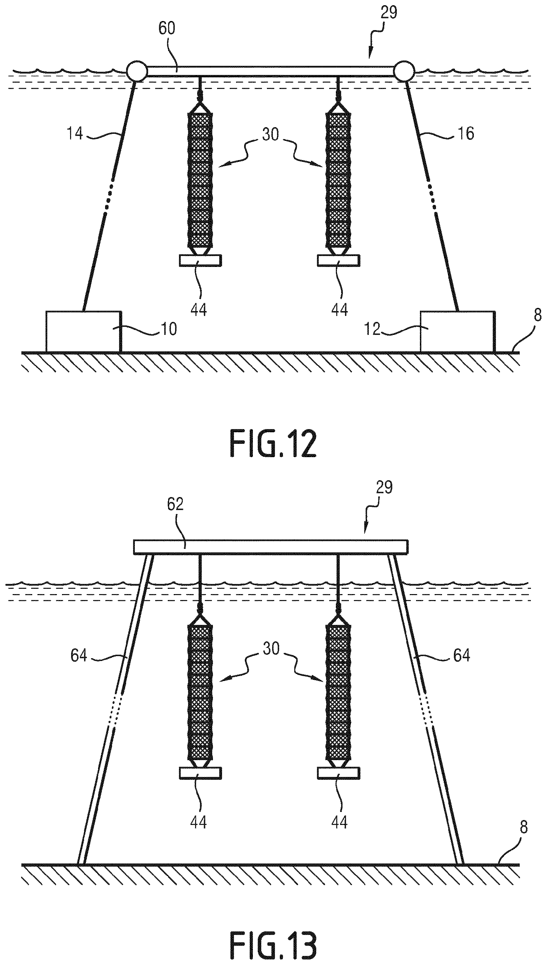

En variante, la structure 29 fixée au fond marin comprend un radeau 60 du type illustré sur la figure 12. Le radeau flotte à la surface de l'eau et est fixé au fond marin 8 par exemple à l'aide de gueuses 10, 12 et de câbles 14, 16. Un ou plusieurs empilements 30 sont suspendus au radeau 60.

Selon une autre variante, la structure 29 comporte une plateforme 62 rigidement fixée au fond marin 8. La plateforme 62 est fixée par des poteaux 64 rigides. Un ou plusieurs empilements 30 est suspendu à la plateforme 62.

La présente invention élimine les phénomènes de surcroissance tout en permettant une croissance homogène des coquillages. Elle permet du fait de l'abrasion liée au mouvement d'obtenir des coquillages à la forme parfaite et à la coquille dure. Le phénomène d'auto-nettoyage, ainsi que le ralentissement de la croissance, limite fortement l'action des agents pathogènes et les conséquences des dégradations cadavériques consécutives aux mortalités. Sur les animaux à taille consommable, elle favorise en outre un fort taux d'engraissement permettant d'obtenir, en plus d'une très belle qualité de forme et de coquille, un taux de chair classant ces produits dans la catégorie des haut de gammes (indices de chair les plus élevés du marché)

## Revendications

1. Dispositif d'élevage en mer d'animaux d'aquaculture, le dispositif (1) comprenant :
- au moins un empilement (30) d'enceintes d'élevage (32) superposées les unes au-dessus des autres selon une direction longitudinale,
- des pales (34) liées aux enceintes d'élevage (32) et agencées pour que les enceintes d'élevage (32) soient entraînées en rotation autour d'un axe longitudinal par le courant marin,
- une structure (29) fixée au fond marin (8),
- une liaison tournante (56) du ou de chaque empilement (30) à la structure (29), ayant un organe (57) autorisant une rotation du ou de chaque empilement (30) par rapport à la structure (29) autour de l'axe longitudinal,
dans lequel le ou chaque empilement (30) est suspendu à la structure (29) par la liaison tournante (56), cette liaison tournante (56) étant agencée pour permettre au ou à chaque empilement (30) de penduler autour d'une position où la direction longitudinale est verticale.

2. Dispositif selon la revendication 1, **caractérisé en ce que** le dispositif (1) comporte une hydrolienne (44) définissant lesdites pales (34).

3. Dispositif selon la revendication 2, **caractérisé en ce que** l'hydrolienne (44) est liée à l'enceinte d'élevage (32) située à une extrémité longitudinale inférieure de l'empilement (30).

4. Dispositif selon la revendication 3, **caractérisé en ce que** l'hydrolienne (44) est liée à l'enceinte d'élevage (32) située à une extrémité longitudinale inférieure de l'empilement (30) par une ligature (48) ou par une fixation rigide (50).

5. Dispositif selon l'une quelconque des revendications 2 à 4, **caractérisé en ce que** l'hydrolienne (44) est en une matière plastique contenant un adjuvant prévu pour améliorer la solidité, ou la résistance aux UV, ou la résistance à l'encrassement.

6. Dispositif selon la revendication 1, **caractérisé en ce que** les pales (34) sont rigidement fixées aux enceintes d'élevage (32) et sont réparties longitudinalement le long de l'empilement (30).

7. Dispositif selon la revendication 6, **caractérisé en ce que** les pales (34) forment ensemble au moins une hélice d'axe longitudinal.

8. Dispositif selon l'une quelconque des revendications précédentes, **caractérisé en ce que** le ou chaque empilement (30) comporte une pluralité de plateaux (36) superposés longitudinalement et enfilés dans un filet tubulaire (38), les plateaux (36) définissant entre eux les enceintes d'élevage (32).

9. Dispositif selon l'une quelconque des revendications 1 à 7, **caractérisé en ce que** les enceintes d'élevage (32) sont des casiers rigides.

10. Dispositif selon l'une quelconque des revendications précédentes, **caractérisé en ce que** le ou chaque empilement (30) comporte un lest (54).

11. Dispositif selon la revendication 10, **caractérisé en ce que** le lest (54) est dimensionné pour que la direction longitudinale forme avec la verticale un angle (a) compris entre 30° et 60° au milieu d'une période séparant la marée haute et la marée basse.

12. Dispositif selon l'une quelconque des revendications précédentes, **caractérisé en ce que** la structure (29) comporte un câble (2), ou un radeau (60), ou une plateforme (62) rigidement fixée au fond marin (8), le ou chaque empilement (30) étant lié audit câble (2) ou audit radeau (60) ou à ladite plateforme (62).

13. Dispositif selon l'une quelconque des revendications précédentes, **caractérisé en ce que** le dispositif (1) comprend plusieurs empilements (30) liés côte à côte à la structure (29), les pales (54) respectives de deux empilements (30) voisins étant agencées pour que lesdits deux empilements (30) voisins soient entrainés en rotation par rapport à la structure (29) suivant des sens de rotation respectifs opposés l'un à l'autre.

14. Dispositif selon l'une quelconque des revendications précédentes, **caractérisé en ce que** la ou chaque enceinte d'élevage (32) comprend au moins une zone (59) de fixation amovible d'une des pales (34).

15. Dispositif selon la revendication 14, **caractérisé en ce que** la zone de fixation (59) est agencée pour permettre sélectivement l'installation de la pale (34) pour la rotation en sens direct ou pour la rotation en sens indirect de l'enceinte d'élevage (32).

## Patentansprüche

1. Vorrichtung zur Aufzucht Tieren der Aquakultur im Meer, wobei die Vorrichtung (1) umfasst:
- mindestens einen Stapel von Zuchtumfassungen (32), die gemäß einer Längsrichtung übereinander angeordnet sind,
- Schaufelblätter (34), die mit den Zuchtumfassungen (32) verbunden sind und derart ausgebildet sind, dass die Zuchtumfassungen (32) von der maritimen Strömung zur Drehung um eine Längsachse herum angetrieben werden,
- eine Struktur (29), die am Meeresboden (8) befestigt ist,
- eine Drehverbindung (56) des oder jedes Stapels (30) an der Struktur (29), die ein Element (57) aufweist, das eine Drehung des oder jedes Stapels (30) in Bezug auf die Struktur (29) um die Längsachse ermöglicht,
in welcher der oder jeder Stapel (30) an der Struktur (29) durch die Drehverbindung (56) aufgehängt ist, wobei diese Drehverbindung (56) ausgebildet ist, dem oder jedem Stapel (30) zu gestatten, dass er um eine Position, in der die Längsrichtung senkrecht ist, pendeln kann.

2. Vorrichtung nach Anspruch 1, **dadurch gekennzeichnet, dass** die Vorrichtung (1) eine Meeresströmungsturbine (44) aufweist, die die Schaufelblätter (34) definiert.

3. Vorrichtung nach Anspruch 2, **dadurch gekennzeichnet, dass** die Meeresströmungsturbine (44) mit der Zuchtumfassung (32) verbunden ist, die an einem unteren Längsende des Stapels (30) liegt.

4. Vorrichtung nach Anspruch 3, **dadurch gekennzeichnet, dass** die Meeresströmungsturbine (44) mit der Zuchtumfassung (32), die an einem unteren Längsende des Stapels (30) liegt, über eine Ligatur (48) oder eine starre Befestigung (50) verbunden ist.

5. Vorrichtung nach einem beliebigen der Ansprüche 2 bis 4, **dadurch gekennzeichnet, dass** die Meeresströmungsturbine (44) aus einem Kunststoff besteht, der ein Zusatzmittel enthält, das für die Verbesserung der Festigkeit oder der UV Widerstandsfähigkeit oder der Widerstandsfähigkeit gegen Verschmutzung vorgesehen ist.

6. Vorrichtung nach Anspruch 1, **dadurch gekennzeichnet, dass** die Schaufelblätter (34) starr an den Zuchtumfassungen (32) befestigt sind und in Längsrichtung entlang des Stapels (30) verteilt sind.

7. Vorrichtung nach Anspruch 6, **dadurch gekennzeichnet, dass** die Schaufelblätter (34) zusammen mindestens einen Längsachsen-Propeller bilden.

8. Vorrichtung nach einem beliebigen der vorhergehenden Ansprüche, **dadurch gekennzeichnet, dass** der oder jeder Stapel (30) eine Mehrzahl von Platten (36) aufweist, die in Längsrichtung übereinanderliegen und in ein rohrförmiges Netz (38) eingesetzt sind, wobei die Platten (36) untereinander die Zuchtumfassungen (32) definieren.

9. Vorrichtung nach einem beliebigen der Ansprüche 1 bis 7, **dadurch gekennzeichnet, dass** die Zuchtumfassungen (32) starre Fächer sind.

10. Vorrichtung nach einem beliebigen der vorhergehenden Ansprüche, **dadurch gekennzeichnet, dass** der oder jeder Stapel (30) einen Ballast (54) aufweist.

11. Vorrichtung nach Anspruch 10, **dadurch gekennzeichnet, dass** der Ballast (54) so dimensioniert ist, dass die Längsrichtung mit der Senkrechten einen Winkel (α) zwischen 30 und 60° in der Mitte einer Periode liegt, die Flut und Ebbe trennt, bildet.

12. Vorrichtung nach einem beliebigen der vorhergehenden Ansprüche, **dadurch gekennzeichnet, dass** die Struktur (29) ein Kabel (2) oder ein Floß (60) oder eine Plattform (62) aufweist, das bzw. die starr am Meeresboden (8) befestigt ist, wobei der oder jeder Stapel (30) mit dem Kabel (2) oder dem Floß (60) oder der Plattform (62) verbunden ist.

13. Vorrichtung nach einem beliebigen der vorhergehenden Ansprüche, **dadurch gekennzeichnet, dass** die Vorrichtung (1) mehrere Stapel (30) umfasst, die nebeneinander mit der Struktur (29) verbunden sind, wobei die jeweiligen Schaufelblätter (54) von zwei benachbarten Stapeln (30) so ausgebildet sind, dass die zwei benachbarten Stapel (30) zur Drehung in Bezug auf die Struktur (29) gemäß jeweiligen Drehrichtungen, die entgegengesetzt zueinander sind, angetrieben werden.

14. Vorrichtung nach einem beliebigen der vorhergehenden Ansprüche, **dadurch gekennzeichnet, dass** die oder jede Zuchtumfassung (32) mindestens eine Zone (59) der lösbaren Befestigung eines der Schaufelblätter umfasst.

15. Vorrichtung nach Anspruch 14, **dadurch gekennzeichnet, dass** die Befestigungszone (59) derart ausgebildet ist, dass wahlweise die Installation des Schaufelblattes (34) ausgebildet ist, eine Drehung in Vorwärtsrichtung oder eine Drehung in Rückwärtsrichtung der Zuchtumfassungen (32) zu gestatten.

## Claims

1. A device for rearing aquaculture animals at sea, the device (1) comprising:
- at least one stack (30) of rearing enclosures (32), superimposed on top of each other in a longitudinal direction,
- blades (34) linked to the rearing enclosures (32) and arranged such that the rearing enclosures (32) are rotated around a longitudinal axis by the sea current,
- a structure (29) fixed to the seabed (8),
- a rotary connection (56) of the or each stack (30) to the structure (29), having a member (57) authorizing a rotation of the or each stack (30) relative to the structure (29) around the longitudinal axis,
wherein the or each stack (30) is suspended from the structure (29) by the rotary link (56), said rotary link (56) being arranged to allow the or each stack (30) to swing around a position where the longitudinal direction is vertical.

2. The device according to claim 1, **characterized in that** the device (1) includes a marine turbine (44) defining said blades (34).

3. The device according to claim 2, **characterized in that** the marine turbine (44) is connected to the rearing enclosure (32) located at a lower longitudinal end of the stack (30).

4. The device according to claim 3, **characterized in that** the marine turbine (44) is connected to the rearing enclosure (32) located at a lower longitudinal end of the stack (30) by a binding (48) or a rigid fastener (50).

5. The device according to any one of claims 2 to 4, **characterized in that** the marine turbine (44) is made from a plastic containing an additive provided to improve the solidity, or UV resistance, or resistance to soiling.

6. The device according to claim 1, **characterized in that** the blades (34) are rigidly attached to the rearing enclosures (32) and are longitudinally distributed along the stack (30).

7. The device according to claim 6, **characterized in that** the blades (34) together form at least one propeller with a longitudinal axis.

8. The device according to any one of the preceding claims, **characterized in that** the or each stack (30) includes a plurality of plates (36) superimposed longitudinally and slipped into a tubular net (38), the plates (36) defining the rearing enclosures (32).

9. The device according to any one of claims 1 to 7, **characterized in that** the rearing enclosures (32) are rigid basket traps.

10. The device according to any one of the preceding claims, **characterized in that** the or each stack (30) includes a ballast (54).

11. The device according to claim 10, **characterized in that** the ballast (54) is dimensioned so that the longitudinal direction forms, with the vertical, an angle (α) comprised between 30° and 60° at the middle of a period separating the high tide and low tide.

12. The device according to any one of the preceding claims, **characterized in that** the structure (29) includes a cable (2), or a raft (60), or a platform (62) rigidly fixed to the seabed (8), the or each stack (30) being connected to said cable (2) or said raft (60) or said platform (62).

13. The device according to any one of the preceding claims, **characterized in that** the device (1) comprises several stacks (30) connected side by side to the structure (29), the respective blades (54) of two adjacent stacks (30) being arranged so that said two adjacent stacks (30) are rotated relative to the structure (29) along respective rotation directions opposite one another.

14. The device according to any one of the preceding claims, **characterized in that** the or each rearing enclosure (32) comprises at least one removable fastening zone (59) for one of the blades (34).

15. The device according to claim 14, **characterized in that** the fastening zone (59) is arranged to selectively allow the installation of the blade (34) for the rotation in the direct direction or for the rotation in the indirect direction of the rearing enclosure (32).
